Europäisches Patentamt

(19) European Patent Office

Office européen des brevets

(11) Publication number: **0 125 373**

**A1**

(12) **EUROPEAN PATENT APPLICATION**

(21) Application number: **84100503.6**

(22) Date of filing: **18.01.84**

(51) Int. Cl.³: **C 08 L 21/00**
**C 08 J 5/10**
**//(C08L21/00, 61/34)**

(30) Priority: **12.05.83 US 493893**

(43) Date of publication of application:
**21.11.84 Bulletin 84/47**

(84) Designated Contracting States:
**AT BE DE FR GB IT LU**

(71) Applicant: **THE FIRESTONE TIRE & RUBBER COMPANY**
**1200 Firestone Parkway**
**Akron, Ohio 44317(US)**

(72) Inventor: **Davis, James A.**
**10688 Mogadore Road**
**Uniontown Ohio 44685(US)**

(72) Inventor: **Koch, Robert C.**
**1121 Merriman Road**
**Akron Ohio 44313(US)**

(74) Representative: **Kraus, Walter, Dr. et al,**
**Patentanwälte Kraus & Weisert Irmgardstrasse 15**
**D-8000 München 71(DE)**

(54) **Rubber compositions and articles thereof having improved metal adhesion and metal adhesion retention.**

(57) Rubber compositions and articles such as tires having improved metal adhesion and metal adhesion retention to metallic reinforcement including brass-plated and zinc-plated steel cord. The improvement comprises admixing from about 0.25 to about 15.0 parts per hundred rubber (phr) of a cobalt or nickel salt and from about 1.0 to about 12.5 phr of an amine-modified, non-heat reactive alkylphenol-formaldehyde resin with a vulcanizable rubber composition prior to embedding the metallic reinforcement therein and curing. A method for improving the metal adhesion and metal adhesion retention between a vulcanizable rubber and metallic reinforcement includes the steps of dispersing from about 0.25 to about 15.0 phr of a cobalt or nickel salt in a vulcanizable rubber composition, dispersing from about 1.0 to about 12.5 phr of an amine-modified, non-heat reactive alkylphenol-formaldehyde resin in the same rubber composition and curing the admixed rubber composition with embedded metallic reinforcement which consists of brass-plated and zinc-plated steel cord. By the addition of the cobalt salt and resin of the present invention to a vulcanizable rubber, at least 50 percent better metal adhesion is obtained as compared with an otherwise identical rubber stock devoid of these components.

Croydon Printing Company Ltd.

## RUBBER COMPOSITIONS AND ARTICLES THEREOF
## HAVING IMPROVED METAL ADHESION AND
## METAL ADHESION RETENTION

### TECHNICAL FIELD

The present invention is directed toward improving the adhesion and adhesion retention between a rubber composition, used in the manufacture of tires, conveyor belts, hoses and the like, and metallic reinforcement cord, such as steel wire and cable which commonly carries a protective coating of zinc or brass, which is embedded in the stock. Flat sheets or strips of such stocks, reinforced with metal or fibers, are utilized as plies or other components of the article and are referred to in the art as rubber skim stocks. Skim refers to a relatively thin layer or coating of the rubber over the reinforcement filaments or cords. Greater thicknesses of rubber are also bonded to metal in other instances such as motor mounts and these would not be termed skim stocks.

In the manufacture of the foregoing rubber articles, particularly steel-belted bias and radial tires, it has become common to reinforce the rubber skim stock material with steel wire or cable. One of the more important uses for a metallic reinforced rubber is as a belt where one or more of these belts are circumferentially oriented beneath the tread stock to maintain the integrity and shape of the tire during inflation and subsequent load. Other areas where metal reinforced rubber skim stock may be utilized is in the body ply, bead or chafer of a tire.

In order for these components to function effectively, it is imperative that adhesion between the rubber and the steel cord be effectively maintained. Because steel is prone to oxidation, which even to a minor degree is highly deleterious to the necessary adhesion with the rubber skim stock, and it would be most impractical to incorporate a chemically clean, oxidation-free steel cord in the belt at the time of its manufacture, the steel cord is plated with zinc or brass thereby protecting it from oxidation until it can be used.

While adhesion between zinc or brass-plated steel cord and rubber is generally far greater than that between the latter and oxidized steel, existing data determined from article life as well as modern testing techniques indicates that adhesion obtained between plated steel cord and the elastomer must be increased for improved article life and service. Adhesion must also be improved between the rubber skim stock and bright steel, i.e., surfaces of the cord which are neither plated nor oxidized, generally occurring when the steel cords and rubber skim stock are cut to size from larger, calendered sheets of the reinforced rubber stock.

## BACKGROUND ART

In order to promote adhesion between rubber and ferrous metals it is known to employ a variety of metallic salts as coatings to the metal or as an ingredient in a rubber composition. It is also known to add various resins as tackifiers and/or adhesion promoters and, in other instances, to employ both a metal salt and a resin. Typical of the first type of art is U. S. Pat. No. 2,912,355 which is directed toward improving the adhesion between rubber and metal by the incorporation into a rubber composition of a calcined, partially oxidized metal salt of an aliphatic fatty acid compound, the metal being cobalt, copper, iron, lead, mercury, nickel or silver.

Another patent of this type is 3,903,026 which discloses a rubber composition containing cobalt carboxylate and magnesium oxide to improve the adhesion of the rubber to zinc or zinc alloy plated steel.

The use of resins alone in rubber compounds is disclosed in U. S. Pat. No. 4,146,513 which provides a modified alkyl-phenol formaldehyde resin which is employed as a tackifier in natural/synthetic rubber stocks where natural building tack has been decreased due to the presence of the synthetic rubber. The patent also reports improved static adhesion between the rubber and reinforcement filaments, such as brass-coated steel wire, when the tackifier resin of the invention is employed.

The particular tackifiers disclosed in the aforementioned patent have also been described in The Journal of Elastomers and Plastics in an article entitled "A New Dimension in Rubber Compound Tackifiers" L. E. Gwin, E. J. Weaver, Vol. 9 (July, 1977). Tests with a 40/40/20 natural rubber/styrene-butadiene rubber/butadiene rubber containing the resin Arofene 8340 (Ashland Chemical Company) established good static and dynamic adhesion properties between the rubber and brass-plated steel.

Finally, patents which disclose the use of both metal salts and resins include U. S. Pat. No. 3,897,583 which is directed toward the adhesion of metal to rubber by incorporating a cobalt salt in a rubber stock which contains an adhesive resin forming system based on methylene donor which is a methylolated nitroalkane in combination with a resorcinol type methylene acceptor. Cobalt salts disclosed include those of aliphatic or alicyclic carboxylic acids having 6-30 carbon atoms.

U. S. Pat. No. 4,076,668 discloses the use of cobalt salts of organic acids, the latter having between 6 and 30 carbon atoms with a monohydroxybenzoic acid component in natural and/or synthetic rubber in order to improve the adhesion between the rubber composition and a variety of reinforcements including plated steel cord. The patent further discloses that the adhesive properties of the rubber composition with fibrous materials, e.g., nylon, Aramid and the like, can be improved along with moisture resistance by the addition of an alkylphenol type resin or cresol-formaldehyde type resin.

U. S. Pat. No. 4,148,769 is directed toward a sulfur-containing rubber composition having improved adhesion with brass-plated steel cords comprising, as unconventional ingredients, litharge and a cobalt salt of a fatty acid.

The patentees further state that adhesive strength is improved by the addition of resorcinol, or a prereacted soluble resorcinol resin. Resorcinol resin has long been known to increase the adhesion between rubber and brass. The data in the patent indicates that even more satisfactory results are obtained when the cobalt salt, litharge and resorcinol are incorporated together in the rubber composition.

Finally, U. S. Pat. No. 4,258,770, owned by our common Assignee, is directed toward the use of certain inorganic salts of cobalt or nickel in combination with a rosin-derived resin as additives to a vulcanizable rubber. Improved rubber to metal adhesion and adhesion retention between the rubber and plated steel cord is reported.

While others have sought to enhance adhesion between rubber compositions and metals by employing various combinations of cobalt and other metal salts with resins, the art of which we are aware has not disclosed the exclusive use of a cobalt or nickel salt with an alkylphenol-formaldehyde resin such as an amine-modified non-heat reactive octylphenol-formaldehyde resin to increase adhesion properties between rubber and metallic reinforcement.

## DISCLOSURE OF INVENTION

The present invention provides a vulcanizable rubber composition having improved metal adhesion and metal adhesion retention properties with metallic reinforcing elements embedded therein by incorporating from about 0.25 to about 15.0 parts by weight of a cobalt or nickel salt per 100 parts of the rubber component in the rubber composition and from about 1.0 to about 12.5 parts by weight of an amine-modified, non-heat reactive alkylphenol-formaldehyde resin per 100 parts of rubber component in the rubber composition prior to curing. The metallic reinforcing elements are selected from the group consisting of brass-plated and zinc-plated steel cord.

The present invention further provides a tire containing a cured rubber composition possessing improved metal adhesion and metal adhesion retention properties with metallic reinforcing elements embedded therein by incorporating from about 0.25 to about 15.0 parts by weight of a cobalt or nickel salt per 100 parts of the rubber component of the rubber composition and from about 1.0 to about 12.5 parts by weight of an amine-modified, non-heat reactive alkylphenol-formaldehyde resin per 100 parts of the rubber component in the rubber composition prior to curing. The metallic reinforcing elements are again selected from the group consisting of brass-plated and zinc-plated steel cord.

Still further, the present invention provides a method of improving metal adhesion and metal adhesion retention properties between a vulcanizable rubber composition and metallic reinforcing elements including the steps of dispersing from about 0.25 to about 15.0 parts by weight of a cobalt or nickel salt per 100 parts of the rubber component in the rubber composition, dispersing from about 1.0 to about 12.5 parts by weight of an amine-modified, non-heat reactive alkylphenol-formaldehyde resin per 100 parts of the rubber component in the rubber composition and curing the rubber composition with metallic reinforcing elements embedded therein. The metallic reinforcing elements are selected from the group consisting of brass-plated and zinc-plated steel cord.

## PREFERRED MODE FOR CARRYING OUT THE INVENTION

To illustrate our invention, a typical example of a rubber composition with metallic reinforcement embedded therein was chosen. In particular, the example used to demonstrate the invention was a rubber skim stock which is suitable for the preparation of rubber articles such as tires. Adhesion between this stock with steel reinforcement subsequent to vulcanization was measured and has also been presented hereinbelow.

The polymer portion of the rubber composition used in the following examples comprised a blend of 60 parts by weight of natural rubber and 40 parts by weight of a styrene butadiene copolymer. Polymer type, however, is not deemed to be a limitation to the practice of the instant invention. Natural rubber may be employed in either a pure or blended state with synthetic rubbers such as styrene butadiene, butyl, ethylene propylene diene, halobutyls, synthetic isoprene or other synthetic rubbers. Further, pure forms of synthetic rubbers such as those disclosed may be used either alone or blended with other synthetic rubbers.

An ingredient utilized in the practice of the present invention includes an organic salt of cobalt or nickel with carboxylic acids, having from one to about 20 carbon atoms. The salts are prepared by the combination of cobalt or nickel hydroxide or hydrate and the carboxylic acid. Suitable monocarboxylic acids used to practice the present invention would be preferably, acetic, propionic, butyric, valeric, undecanoic, lauric, palmitic, stearic, nonadecanoic and the like. A preferred organic salt of cobalt is cobalt propionate which was employed in the experimental work discussed hereinbelow. It can be prepared from propionic acid and cobalt hydroxide. Cobalt propionate is a purple-colored powder having about 29% cobalt, a water content of up to about 9.0 percent and a specific gravity of $1.68 \pm 0.1$ at 25° C. Cobalt content and specific gravity will vary with the water content.

Such salts are partially hydrated, as a water content of about 8.0 percent is equivalent to one mole of water. Cobalt propionate can carry up to three moles of water; however, the lower water content is preferable as the percentage of cobalt salt will be higher per unit weight of salt employed. While the salt can be dried according to known methods in the art to remove the water of hydration it is highly hydroscopic and will usually pick up water in the foregoing range from the warehouse and factory environment. It is important that the salt not be calcined or otherwise oxidized during drying or before use in the present invention inasmuch as independent tests we have run with calcined cobalt propionate have established that a decrease in adhesion properties results.

Suitable dicarboxylic acids include both aliphatic and aromatic acids having from two to about 20 carbon atoms. These include acids such as oxalic, malonic, maleic, succinic, glutaric, adipic, pimelic, suberic, azelaic, sebacic, phthalic, isophthalic, terephthalic, homophthalic, o,m and p-phenylenediacetic and o-phenyleneacetic-beta-propionic acid. None of the salts formed with these acids should be calcined or oxidized prior to use.

Inorganic salts of cobalt or nickel can also be employed and would include anions such as hydroxides (hydrates), chlorides and carbonates. In order for a salt to be usable in the practice of the present invention, the only requirement it must meet is that it be soluble or dispersable in the rubber stock. A particular salt can readily be evaluated by incorporating it into a polyisoprene or polybutadiene rubber on a two-roll mill, or equivalent mixing apparatus, at about 82° C. If the salt selected is not easily dispersed therein, it may be desirable to select another.

Amounts of the cobalt or nickel salt employed can range from about 0.25 to about 15.0 parts per hundred parts of rubber (phr) with 0.5 to 5.0 phr and specifically 0.96 phr of cobalt and 3.0 phr of nickel being preferred.

Dyphene 8340, an amine-modified, non-heat reactive alkylphenol-formaldehyde tackifying resin normally used to practice this invention is prepared first, by alkylating the para-position on the phenol ring and then, by reacting excess para-substituted alkylphenol with formaldehyde to form a higher molecular weight, resinous solid material containing terminal methylol groups. This latter reaction is completed by reacting excess alkylated phenol with formaldehyde using mole ratios of 1.0 and 0.6-0.8, respectively, in the presence of an acidic catalyst.

The phenolic component is a difunctional hydroxybenzene having an alkyl substituent in the para-position which in the case of Dyphene 8340 is a tertiary $C_8$ group. In the case of other alkylphenol resins, the alkyl substituent in the para-position may contain one to 24 carbon atoms, preferably four to 12 carbon atoms. In general, with respect to alkylphenol-formaldehyde tackifying resins, butyl, octyl, nonyl and dedecyl groups are the more frequent alkyl groups found on the para-position of the phenolic rings. The alkylation procedure used to prepare the alkyl phenols is usually carried out in the presence of an acidic catalyst with equimolecular amounts of phenol and the alkylating agent.

The alkylphenol-formaldehyde resin is then reacted with di-2-hydroxyalkylamine or morpholine in the presence of more formaldehyde to provide the amine modification. Amine-modified alkylphenol-formaldehyde resins, e.g., Dyphene 8340, prepared by this procedure are described in U.S. Pat. No. 4,146,513, the subject matter of which is incorporated herein by reference.

Formaldehyde reacts with the alkylphenol (usually at the ortho position on the phenolic ring) to form a series of phenolic rings connected by methylene groups. The methylene groups located between the phenolic rings are relatively stable to heat, thus remaining unchanged at vulcanization temperatures normally attained during the curing of a tire. The molecular weight of an amine-modified, non-heat reactive alkylphenol-formaldehyde resin used in the present invention, Dyphene 8340, may range from about 600 to about 1900 indicating a degree of polymerization of about 3 to as many as 9 phenolic rings which are connected by methylene groups.

Resin solubility in a rubber skim stock depends on several factors. The compatibility of the amine-modified alkylphenol-formaldehyde resin with the rubber is dramatically affected by the molecular weight of the resin itself as well as by the type of alkyl group in the para-position on the phenolic ring. The molecular weight of the amine-modified alkylphenol-formaldehyde resin itself is another important factor. The high molecular weight resins generally have less mobility and solubility in elastomeric compositions.

The amine-modified alkylphenol-formaldehyde resin, as used in the work discussed hereinbelow, is a flake form having an acid number of 48, a percent ash content of 0.05, a ring and ball softening point 110° C and a specific gravity of 1.023 at 25° C. Amounts of the amine-modified alkylphenol-formaldehyde resin employed can range from about 1.0 to about 12.5 phr with 2.0 to 4.0 phr being preferred. Generally, the amount of resin employed should increase as the level of synthetic rubber increases.

In order to determine the improvement in adhesion and adhesion retention obtained when the cobalt salt and amine-modified alkylphenol-formaldehyde resin are added to a rubber composition, T-adhesion tests (rubber-to-steel cord) were conducted according to the procedure which follows.

The test utilized T-adhesion pads prepared by placing 60 gauge slabs of uncured fully compounded rubber skim stock on 51 gauge fabric reinforced rubber backing. Commercial brass-coated cables (7/2 + 1 wire) were placed between two pads of the reinforced rubber skim stock with the wires in contact with the uncured rubber skim at 1.25 cm intervals. The construction of the cables included a core of two wires which were wrapped by seven strands of wire 0.22 mm in diameter which were in turn wrapped by a single strand of wire 0.15 mm in diameter. The width of each adhesion pad was 1.25 cm. The pads were placed in a preheated curing mold and were cured for 30 minutes at 149° C. Rubber-steel cord adhesion testing was done on a Model 1130 Instron Universal Tester at a crosshead speed of 25.4 cm per minute and 110° C. The T-adhesion pads were preheated in the 110° C oven for 20 minutes prior to testing. Oven aging of the cured T-adhesion pads was done in a forced air oven at 121° C for two days. Steam bomb aging of the cured samples was done in a pressure tight bomb for one hour at 149° C, in a saturated steam atmosphere. Oxygen bomb aging of the cured T-adhesion pads was done in a pressure tight bomb at 2.07 MPa pressure for 24 and 48 hours at 70° C in a 100 percent oxygen atmosphere.

Detailed T-Adhesion Test Procedure

1. Using a Clicker machine and a 15.24 x 1.25 cm die, prepare an adequate number of calendered and control stock samples for T-adhesion pad building.

2. Use one piece of calendered fabric reinforced rubber backing (0.1295 cm).

3. Ply one piece of 60 gauge control rubber skim stock (0.1524 cm) onto the fabric backing.

4. Place sample in building jig with fabric side down.

5. Place ten cords (of brass or zinc coated wire) approximately 17.78 cm in length equally spaced on top of the two piece assembly.

6. Invert another 2 ply assembly, made as in items 1, 2 and 3, on top of cords so that cords are between the 2 layers of rubber skim stock to be tested.

7. This assembly should now fit snugly into the cavity of the curing mold.

8. Adhesion pads shall be cured for 30 minutes at 149° C and then allowed to equilibrate for 24 hours before testing.

9. Testing Machine: Model 1130 Instron Universal Tester.

10. Test speed 25.4 cm/minute; testing temperature, 110° C after 20 minutes preheat.

11. The top grip shall be of a special holder made for the cured sample, with a slot in the bottom to permit the sample to be inserted with the wires protruding. The bottom grip should be a wedge type, designed to exert increasing tightening as each wire is pulled from the cured sample.

12. Record 10 wire pull-outs and average. Multiply average pull-out force value by 0.3572 to obtain kilograms per centimeter.

In the tests which follow, a rubber skim stock, composition A, was prepared which did not contain the adhesion promoting ingredients of the present invention. Rubber composition B and C were prepared exactly as was composition A except that they contained 2.0 phr of Dyphene 8340 resin and 0.96 phr cobalt propionate, respectively. Rubber composition D, the present invention, was also prepared exactly as was composition A except that 0.96 phr of cobalt propionate and 2.0 phr of Dyphene 8340 resin were added. Thus, a direct comparison of the effect of the two ingredients is shown. Formulations for each are as follows with all parts given on the basis of parts per hundred parts of rubber (phr) by weight.

|  | Rubber Composition | | | |
| Compounding Ingredients | A | B | C | D |
| --- | --- | --- | --- | --- |
| Natural Rubber (E grade) | 60 | 60 | 60 | 60 |
| SBR (18% styrene) | 40 | 40 | 40 | 40 |
| HAF Black | 55 | 55 | 55 | 55 |
| Zinc Oxide | 7.5 | 7.5 | 7.5 | 7.5 |
| Stearic Acid | 0.50 | 0.50 | 0.50 | 0.50 |
| Santoflex DD[1] | 2.0 | 2.0 | 2.0 | 2.0 |
| Sundex 790[2] | 2.0 | 2.0 | 2.0 | 2.0 |
| Dyphene 8340 resin[3] | – | 2.0 | – | 2.0 |
| Co propionate[4] | – | – | 0.96 | 0.96 |
| NOBS Special accelerator[5] | 0.85 | 0.85 | 0.85 | 0.85 |
| Santoflex 13[6] | 1.0 | 1.0 | 1.0 | 1.0 |
| Sulfur MB[7] | 4.38 | 4.38 | 4.38 | 4.38 |
| Santogard PVI[8] | 0.10 | 0.10 | 0.10 | 0.10 |

1) 6-dodecyl-1,2-dihydro-2,2,4-trimethylquinoline

2) medium aromatic process oil; 0.5% max. Asphaltenes, 30% max. Saturates, 18% max. polar compounds, 55% min. aromatics

3) Modified non-heat reactive octylphenol-formaldehyde resin, flake form, acid number 48, % ash content 0.05, ring and ball softening point 110° C, specific gravity of 1.023 at 25° C

4) Cobalt propionate - purple powder, about 29% cobalt

metal, a water content of up to about 9.0%, specific gravity of $1.68 \pm 0.1$ at 25° C

5)  N-oxydiethylene benzothiazole-2-sulfenamide

6)  N-(1,3-dimethylbutyl)-N'-phenyl-p-phenylene-diamine

7)  80/20 sulfur/extender oil preblend, with a naphthenic oil in the range of 18-22% oil. The sulfur is a yellow powder, 89.5% min. of which is insoluble sulfur.

8)  N-(cyclohexylthio)phthalimide

It is to be understood that the foregoing composition of the rubber skim stock has been presented solely to enable those skilled in the art to have at least one rubber skim stock with which to practice the invention. As such, the present invention is not to be limited only to this specific formulation.

The four compositions were each used to build T-adhesion pads with zinc-plated and brass-plated steel cord. As stated hereinabove, the particular steel cord construction employed for this testing has two strands of wire wrapped by seven strands which is in turn wrapped by a single strand. This style is commonly referred to in the art as 7/2+1 (7 over 2 plus 1) steel cord configuration. Steel cord configuration, however, is not a limitation to the present invention and, therefore, other styles of brass or zinc-plated steel cord are applicable. Thus, even single strands of brass or zinc-plated steel cord may be employed.

Five sets of tests were conducted on each of the four stocks for comparison. Table I shows the results of the testing under normal, oven aged and steam aged conditions and Table II shows the results under 24 and 48 hours oxygen aged conditions. The force necessary to pull or remove the metallic reinforcement from the vulcanized rubber skim stock is given first, in kg/cm, followed by the percent of rubber skim stock remaining on the surface of the metallic reinforcement. The amount of rubber skim stock remaining on the metallic reinforcement was determined by visual examination and has been reported as % rubber coverage.

TABLE I

| Steelcord T-Adhesion Test | Rubber Composition | | | |
|---|---|---|---|---|
| | A | B | C | D |
| Normal (Unaged)[a] | | | | |
| Brass-plated cord | | | | |
| Kg/cm | 19.90 | 19.78 | 27.10 | 32.43 |
| % rubber coverage | 25 | 25-30 | 90 | 90-95 |
| Zinc-plated cord | | | | |
| Kg/cm | 4.21 | 5.29 | 28.52 | 32.56 |
| % rubber coverage | 0 | 0 | 90-95 | 95-100 |
| Oven Aged[b] | | | | |
| Brass-plated cord | | | | |
| Kg/cm | 11.78 | 13.32 | 21.88 | 19.45 |
| % rubber coverage | 60 | 70-75 | 90 | 95-100 |
| Zinc-plated cord | | | | |
| Kg/cm | 2.73 | 2.66 | 14.25 | 17.50 |
| % rubber coverage | 0 | 0 | 75-80 | 85-90 |
| Steam Bomb Aged[c] | | | | |
| Brass-plated cord | | | | |
| Kg/cm | 26.07 | 25.31 | 15.92 | 21.66 |
| % rubber coverage | 90 | 90-95 | 70 | 70-75 |
| Zinc-plated cord | | | | |
| Kg/cm | 3.38 | 3.84 | 19.47 | 24.83 |
| % rubber coverage | 0 | 0 | 75 | 85 |

a) T-adhesion pads cured 30 minutes at 149° C and tested at 110° C

b) T-adhesion pads cured 30 minutes at 149° C, heat aged in forced air oven for 2 days at 121° C and tested at 110° C

c) T-adhesion pads cured 30 minutes at 149° C, aged in a pressure tight bomb for 1 hour at 149° C in a saturated steam atmosphere and tested at 110° C

As can be determined first from Table I, normal and oven aged adhesion of the composition D to brass or zinc-plated steel cord was significantly better than for compositions A, B or C. Rubber composition A, which contained neither the alkylphenol-formaldehyde resin nor the cobalt propionate, showed low adhesion values with 60 to 0% rubber coverage. When 2.0 phr of tackifier resin was added to the compound formulation of A to form composition B, equal to slightly better results were achieved. Adhesion results were improved when 0.96 phr cobalt propionate was incorporated into the formulation of composition C. Finally, when both 2.0 phr of tackifier resin and 0.96 phr of cobalt propionate were added to the compound formulation of A to form composition D, one example of the present invention, significantly better adhesion and rubber coverage was obtained. The most noticeable change observed for composition D was the vastly increased rubber coverage as compared to compositions A and B. Coverage values were better as compared to composition C.

The rubber coverage measurement is deemed to be significant in that it visually represents the increased adhesion of the rubber composition to the plated steel cord. As is well known to those skilled in the art, the amount of rubber remaining on the steel cord after it has been pulled from a cured T-addhesion pad represents the relationship of the adhesive force attaching the rubber composition to the surface of the steel cord and the tensile strength of the rubber composition itself. Large percentages of rubber coverage indicate that the adhesion to the steel cord exceeds the internal strength of the rubber composition itself, i.e., tear strength. Therefore, when the rubber coverage is very high it can be concluded that the metal to rubber adhesion is greater than the force measured to pull the steel cord out of the rubber pad since the force measured was a result of the rubber composition rupturing and not chemical bonds formed at the metal rubber interface.

As can be seen from Table I, composition D with both zinc and brass-plated steel cord under normal and oven aged conditions exhibited excellent coverage and, therefore, superior rubber-to-metal adhesion over compositions A and B and better rubber-to-metal adhesion over composition C.

Normal or unaged testing is merely a measurement of the initial adhesive properties betweeen the rubber composition and the metallic reinforcement. The oven aging test is an accelerated heat aging test and is significant in determining the effect of heat on the thermal stability of the chemical bonds formed between the rubber composition and the metallic reinforcement during vulcanization.

In Table I the final set of values reported are those conducted on brass-plated and zinc-plated steel cord after steam bomb aging. Steam bomb aging for one hour at 149° C is an accelerated humidity aging test and is significant in determining the stability of the chemical bonds formed between the rubber skim stock and the metallic reinforcement when exposed to moisture or steam under pressure. The instant invention showed significant improvement in adhesion and rubber coverage for the zinc-plated steel cord. Adhesion to brass-plated steel cord was not improved but was acceptable.

## TABLE II

| Steelcord T-Adhesion Test | Rubber Composition | | | |
|---|---|---|---|---|
| | A | B | C | D |
| 24 Hours Oxygen Bomb Aged[a] | | | | |
|     Brass-plated cord | | | | |
|         Kg/cm | 12.83 | 12.07 | 23.78 | 24.47 |
|         % rubber coverage | 0 | 0 | 90 | 95 |
|     Zinc-plated cord | | | | |
|         Kg/cm | 3.55 | 3.96 | 20.41 | 25.40 |
|         % rubber coverage | 0 | 0 | 85 | 90-95 |
| 48 Hours Oxygen Bomb Aged[b] | | | | |
|     Brass-plated cord | | | | |
|         Kg/cm | 11.28 | 11.87 | 21.07 | 22.11 |
|         % rubber coverage | 0 | 0 | 90 | 90 |
|     Zinc-plated cord | | | | |
|         Kg/cm | 3.70 | 3.25 | 18.65 | 22.63 |
|         % rubber coverage | 0 | 0 | 80 | 90-95 |

a) T-adhesion pads cured 30 minutes at 149° C, aged in a pressure tight bomb for 24 hours at 70° C in a 100% oxygen atmosphere and tested at 110° C

b) T-adhesion pads cured 30 minutes at 149° C, aged in a pressure tight bomb for 48 hours at 70° C in a 100% oxygen atmosphere and tested at 110° C

      In the second series of tests, reported in Table II, the effect of oxygen exposure to the rubber-metal bond is presented for periods of 24 and 48 hours exposure in a 100% oxygen atmosphere at 70° C. Oxygen, which commonly functions as an oxidizing agent, has long been known by those skilled in the art to have deleterious effects on the chemical nature of the rubber to metal bonds whether they be zinc-sulfur or copper-sulfur bridges. The significance of oxygen bomb aging tests is to determine the stability of chemical bonds formed between the rubber skim stock and the metallic reinforcement when exposed to conditions of high oxygen atmosphere and high temperature, as compared to ambient, and extended periods of time.

As is clearly seen from the data reported in Table II, composition D showed significantly improved rubber adhesion values and rubber coverage compared to either composition A or B and generally better values than composition C. Most significant was the complete absence of rubber coverage in compositions A and B while composition D showed, in most instances, greater than 90% coverage.

As was stated in the Background hereinabove, U. S. Pat. No. 4,076,668 discloses the use of organic acid cobalt salts, monohydroxybenzoic acids and alkylphenol-type resins. While specific tests were not conducted herein according to the teachings of this patent, certain comparisons between the data disclosed therein with our data can be made. Reported in the patents were normal (unaged) adhesion tests between the rubber and brass-plated steel cord.

First, with respect to Tables 1 and 2 of the patent, nine experiments were reported employing the following rubber compositions: Experiments 1-7, natural rubber, an organic salt of cobalt and hydroxybenzoic acid; standard experiment 1, natural rubber and a cobalt salt alone; comparative experiment 1, natural rubber, cobalt salt and an alkylphenol resin. In Table 2, the adhesive strength and rubber coverage were best with brass-plated steel cord for experiments 1-7 (no resin). These values exceeded both the standard and comparative experiments with the latter (rubber and resin) performing only slightly better than the cobalt salt alone (standard experiment 1).

With reference next to Tables 3 and 4, the following rubber compositions were prepared and tested: Experiments 8-11 and 14, natural rubber, organic salt of cobalt, hydroxybenzoic acid and cresol-formaldehyde resin; experiments 12-13, natural rubber, cobalt salt, hydroxybenzoic acid and alkylphenol resin; comparative experiment 2, natural rubber, cobalt salt and alkylphenol resin; standard experiment 2, natural rubber and cobalt salt alone. In Table 4, the adhesive strength and rubber coverage with both brass- and zinc-plated steel cord for comparative experiment 2 (cobalt salt and resin) were better than standard experiment 2(cobalt salt alone) but experiments 8-14 (cobalt salt, hydroxybenzoic acid and resin) were better than both of these.

Significance of these results can be seen by comparing comparative experiments 1 and 2 with composition D reported herein inasmuch as both contained an organic salt of cobalt and an alkylphenol-type resin. Adhesive strength values ranging between 63 and 67 Kg/in were reported in the patent which are equivalent to values of 24.76 to 26.31 Kg/cm. The value we found and reported for composition D, normal (unaged) adhesion was considerably better at 32.42 Kg/cm. Moreover the increase in adhesion value between comparative experiment 2 and standard experiment 2 was only 4.69% while the difference between comparable experiments reported herein (Composition C vs. Composition A) was 19.67%.

The highest values reported in the patent were obtained with cobalt salts and hydroxybenzoic acid components which ranged between 67 and 82 Kg/in or 26.31 to 32.23 Kg/cm. Thus, we have demonstrated better values for the use of a cobalt salt and the amine-modified alkylphenol-formaldehyde resins disclosed herein than have been taught as possible according to Pat. No. 4,076,668. Moreover, we have shown comparable to better values resulting from practice of our invention as compared to the preferred embodiment of the patent (Table 2) where a cobalt salt and a hydroxybenzoic acid component were employed.

Also referenced in the Background was U.S. Pat. No. 4,146,513 and the publication by Gwin and Weaver. Both examined and reported the adhesion between a natural/synthetic rubber stock and brass-plated steel wire according to a static adhesion test, ASTM D 2229-73. Compounds containing the resin were reported as Examples 8-14 in Table II of the patent. Pounds of force required to extract the wire in the best instance (Example 11) were 183.6 ± 12.4 with a percent rubber coverage of 100%. A control stock without the resin required 156.6 ± 12.3 pounds of force and provided 90% coverage. These values are equivalent to 32.79 ± 2.21 Kg/cm for Example 11 and 27.97 ± 2.20 Kg/cm for the control. While the adhesion value reported for Example 11 appears to be as good as we have reported, it must be noted that it represents an increase of only 17.23% over the control while we have obtained an improvement of 62.96% over our control (Composition D vs. Composition A).

Based on the foregoing results reported in Tables I and II, we consider the presence of an amine-modified alkylphenol-formaldehyde resin, such as Dyphene 8340 resin and a cobalt salt such as cobalt propionate in a rubber skim stock to be effective in promoting adhesion between the rubber skim stock and metallic reinforcement. In fact, the use of both of these components has been shown to provide an improvement in adhesion of at least 50 percent over a control stock wherein neither component was present. As stated hereinabove, the rubber can be natural or synthetic or a blend and formulated as a rubber stock or a skim stock. Also, the wire coating in the practice of our invention can be, for example, brass-plated wire, i.e., 70% Cu, 30% Zn,; or zinc-plated wire. The wire can be in the form of a strand, mat, web, ply or braid.

The present invention also finds utility in, for example, brassed metal-rubber articles such as motor mounts, cutless bearings, torsilastic springs, power belts, printing rolls, metal wire reinforced or braided hose, electrical deicers, shoe heels and wherever it is desired to secure rubber to metal or provide a flexible and strong, thermally stable bond between the same.

In conclusion, it is to be understood that all methods and rubber compounds disclosed herein fall within the scope of the claimed invention and that the subject invention is not to be limited by the examples set forth herein. As will be apparent to those skilled in the art, the formulation of the rubber composition can be varied within the scope of our total specification disclosure by

-20-

selection of various inorganic and organic salts of cobalt or nickel and amine-modified, non-heat reactive alkylphenol-formaldehyde resins as well as the amounts thereof, and it is believed that practice of the present invention can be determined without departing from the spirit of the invention herein disclosed and described, the scope of the invention being limited solely by the scope of·the attached claims.

# CLAIMS

1. A vulcanizable rubber composition having improved metal adhesion and metal adhesion retention properties with metallic reinforcing elements embedded therein, the improvement wherein:

   from about 0.25 to about 15.0 parts by weight of a cobalt or nickel salt per 100 parts of the rubber component in said rubber composition; and

   from about 1.0 to about 12.5 parts by weight of an amine-modified, non-heat reactive alkylphenol-formaldehyde resin per 100 parts of the rubber component in said rubber composition are incorporated into said rubber composition prior to curing, and

   wherein said metallic reinforcing elements are selected from the group consisting of brass-plated steel cord and zinc-plated steel cord.

2. A rubber composition as set forth in claim 1, wherein said salts of cobalt and nickel are selected from the group consisting of organic salts of monocarboxylic acids having from one to about 20 carbon atoms and dicarboxylic acids having from two to about 20 carbon atoms and inorganic salts selected from the group consisting of hydroxides, chlorides and carbonates.

3. A rubber composition as set forth in claim 2, wherein said organic salt of cobalt is cobalt propionate.

4. A rubber composition as set forth in claim 1, wherein said amine-modified, non-heat reactive alkylphenol-formaldehyde resin is a modified octylphenol-formaldehyde resin.

5. A rubber composition as set forth in claim 2, wherein said organic salt of cobalt is cobalt propionate, said resin is a modified octylphenol-formaldehyde resin and and which composition exhibits at least 50 percent improved metal adhesion over a vulcanizable rubber composition devoid of said salt and said resin.

6. A tire containing a cured rubber composition having improved metal adhesion and metal adhesion retention properties with metallic reinforcing elements embedded therein, the improvement wherein:

from about 0.25 to about 15.0 parts by weight of a cobalt or nickel salt per 100 parts of the rubber component in said rubber composition; and

from about 1.0 to about 12.5 parts by weight of an amine-modified, non-heat reactive alkylphenol-formaldehyde resin per 100 parts of the rubber component in said rubber composition are incorporated into said rubber composition prior to curing, and

wherein said metallic reinforcing elements are selected from the group consisting of brass-plated steel cord and zinc-plated steel cord.

7. A tire, as set forth in claim 6, wherein said salts of cobalt and nickel are selected from the group consisting of organic salts of monocarboxylic acids having from one to about 20 carbon atoms and dicarboxylic acids having from two to about 20 carbon atoms and inorganic salts selected from the group consisting of hydroxides, chlorides and carbonates.

8. A tire, as set forth in claim 7, wherein said organic salt of cobalt is cobalt propionate.

9. A tire, as set forth in claim 6, wherein said amine-modified, non-heat reactive alkylphenol-formaldehyde resin is a modified octylphenol-formaldehyde resin.

10. A tire, as set forth in claim 7, wherein said organic salt of cobalt is cobalt propionate, said resin is a modified octylphenol-formaldehyde resin and wherein said rubber composition exhibits at least 50 percent improved metal adhesion over a cured rubber composition devoid of said salt and said resin.

11. A method for improving metal adhesion and metal adhesion retention properties between a vulcanizable rubber composition and metallic reinforcing elements comprising the steps of:

dispersing from about 0.25 to about 15.0 parts by weight of a cobalt or nickel salt per 100 parts of the rubber component in said rubber composition; and

dispersing from about 1.0 to about 12.5 parts by weight of an amine-modified, non-heat reactive alkylphenol-formaldehyde resin per 100 parts of the rubber component in said rubber composition; and

curing said rubber composition with said metallic reinforcing elements embedded in said rubber composition wherein said metallic reinforcing elements are selected from the group consisting of brass-plated steel cord and zinc-plated steel cord.

12. A method, as set forth in claim 11, wherein said salts of cobalt and nickel are selected from the group consisting of organic salts of monocarboxylic acids having from one to about 20 carbon atoms and dicarboxylic acids having from two to about 20 carbon atoms and inorganic salts selected from the group consisting of hydroxides, chlorides and carbonates.

13. A method, as set forth in claim 12, wherein said organic salt of cobalt is cobalt propionate.

14. A method, as set forth in claim 11, wherein said amine-modified, non-heat reactive alkylphenol-formaldehyde resin is a modified octylphenol-formaldehyde resin.

15. A method, as set forth in claim 12, wherein said organic salt of cobalt is cobalt propionate, said resin is a modified octylphenol-formaldehyde resin and wherein said steps of dispersing said salt and said resin provide an improvement in metal adhesion of at least 50 percent over a vulcanizable rubber composition devoid thereof.

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,Y | US-A-4 146 513 (E.J. WEAVER et al.) <br> * Claims 1,13; column 9, lines 25-28 * | 1-15 | C 08 L 21/00 <br> C 08 J 5/10 // <br> (C 08 L 21/00 <br> C 08 L 61/34 ) |
| Y | GB-A-1 389 800 (YOKOHAMA RUBBER) <br> * Claim 1 * | 1-15 | |
| D,Y | US-A-4 076 668 (K. KANEDA et al.) <br> * Column 2, lines 15-44 * | 1-15 | |
| A | EP-A-0 039 769 (FIRESTONE) <br> * Claim 1 * | 13 | |

TECHNICAL FIELDS SEARCHED (Int. Cl. ³)

C 08 J
C 08 L

The present search report has been drawn up for all claims

| Place of search | Date of completion of the search | Examiner |
|---|---|---|
| THE HAGUE | 24-08-1984 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503.03.82